# EUROPEAN PATENT APPLICATION

(11) **EP 2 093 999 A1**
(43) Date of publication of application: **26.08.2009**
(21) Application number: 09153356.2
(22) Date of filing: 20.02.2009
(51) Int. Cl.: H04N 5/222, H04N 7/18, G08B 13/196

(54) **Integration of video information**

(30) Priority: 22.02.2008 GB 0803254
(71) Applicant: Crockford, Christopher Neil John, Colchester, Essex CO3 3UN (GB)
(72) Inventor: Crockford, Christopher Neil John, Colchester, Essex CO3 3UN (GB)
(74) Representative: Sanderson, James L.C.

(57) **Abstract**

The present invention provides a method of integrating video information from a plurality of different video sources into a visualisation environment that may be conveniently displayed on a video device (11). The video sources comprising a first source (13), often cartographic in nature, which is representative of a background (14, 19) for the visualisation environment, and a plurality of second sources (5, 6, 7, 8) each of which is a video feed of a camera's field of view from a viewpoint within the background. These second sources include spatial data for the field of view. The plurality of video feeds from the second sources are integrated with the background from the first source so that the visualisation environment comprises each of the fields of view (15, 16, 17, 18) displayed at an appropriate position and direction in relation to the concurrently displayed background. A viewer's notional reference point, ie the viewer's viewpoint within the visualisation environment, can be altered relative to the background thus altering the view as shown on the display device and the display of the video feeds within that background.

## Description

The present invention relates to a method and apparatus for integrating video information derived from a plurality of video sources into a visualisation environment for convenient viewing, manipulation and interaction thereof.

The use of CCTV cameras, video cameras and other video sources for a variety of uses, particularly for remote monitoring, has becoming more and more prevalent. They are used for a variety of purposes including traffic management, crime reduction and public safety. Multiple cameras are used throughout an area under surveillance to ensure that the area is covered. However, comprehensive coverage requires many cameras, and this means that a large number of video feeds must be monitored. For any person who is monitoring the cameras there will usually be a bank of monitors each showing one or more video feed. This makes it very hard to monitor everything that is happening in real time and often requires a grasp of the complicated spatial interrelationship of the cameras in real life to permit understanding and integration of the video data. For example a subject walking off the left side of one view may very well appear from the top, bottom, left or right of a different view which may be displayed in the bank at a quite different location. Trying to track such a subject is obviously very difficult.

Such prior art systems are also very slow when reviewing old stored footage, as those who review such stored footage may be even less aware of the temporal or spatial interrelationship of the sources at which they are looking, and may well only be reviewing one camera's feed at a time. This makes it even harder to track a subject through multiple cameras.

The present invention aims to overcome these problems and provide a system where multiple video sources may be simultaneously displayed within one geographically representative environment. This would provide even unskilled operators with a logical and spatially representative display through which subjects (of any sort) may be monitored.

Prior art systems exist (such as those described in GB2384128, GB2424784, and International application 97/23096) and provide methods for integrating video information derived from a plurality of video sources into a visualisation environment, but these are limited in their scope and application. They do not provide the end user with the functionality that the present invention provides and they have never really been adopted commercially.

Therefore according to the present invention there is provided a method of integrating video information derived from a plurality of video sources into a visualisation environment for display on a video device, the video sources comprising a first source supplying a video signal representative of a background for the visualisation environment and a plurality of second sources each of which provides a video feed representative of a field of view from a viewpoint within the background and including spatial data for the field of view; in which method the plurality of video feeds from the second sources is integrated with the video signal from the first source so that the visualisation environment comprises each of the fields of view displayed on the display device in an appropriate position and direction in relation to the concurrently displayed background and wherein a viewer's notional reference point, which is the viewer's viewpoint within the visualisation environment, can be altered relative to the background thus altering the view as shown on the display device and the display of the video feeds within that background.

It is preferable that temporal data is associated with the individual video feeds, as this allows them to be coordinated and temporally referenced with respect to each other particularly for non-contemporaneous display of stored data. Temporal data may also be associated with the first source if this is subject to alteration over time; however the first source will often represent a substantially unchanging geographical environment, perhaps cartographic in nature where no time dependent alteration occurs. In this case the display provided by the first source would alter only in response to movement of the viewer's viewpoint.

The present invention allows for convenient and logical representation and display of the multiple video sources which allows enhanced contemporaneous monitoring and interaction. However the video sources may comprise stored data filmed in the past. Also, the live video sources, along with associated spatial and temporal data, may be stored for later retrieval, replay or comparison with another time frame's data for the same spatial data.

The present invention provides a visualisation environment that improves review of visual data collected from a real space. It is highly preferable that a viewer's viewpoint within the visualisation environment (and hence the viewer's notional reference point in the real space), can be altered relative to the background thus altering the view as shown on the display device and the display of the video feeds within that background. If the size of the real space represented by the visualisation environment is small the viewer's viewpoint within that space could be fixed, but that will be less common. Even if the viewpoint is fixed, the angle of view from that point could still change.

The nature and extent of the spatial data required to integrate the associated video feeds within the visualisation environment can vary dependant upon various factors including the nature of the environment and the location of the sources. Preferably the spatial data includes for each source one or more of: latitude and longitude, zenith, azimuth, focal length, target width, target height, pitch, roll and yaw. Some of these would not apply to, or would be constant for, fixed cameras. Equivalent cartographic formats such as OSG36 or WGS84 could also be used to provide location data or for location on the background. For moving cameras, such as those mounted on helicopters, most if not all of such data would be needed on a per frame basis.

The spatial and or temporal data may be associated with each video feed by the source generating the video feed. Such data could then be transmitted from the source and used to reference and control the display of the video feed. This requires the source to be able to provide the necessary spatial data, which may not be possible for all cameras. For cameras that cannot provide this information, it could be integrated therewith, by apparatus performing the present invention, using other data available and linking this with the source.

The nature of the first source depends on the environment to be represented. The environment could take many different forms, which could try to stylistically model or accurately represent the real space in question. The first source may provide a background that is cartographic in nature. It may also comprise a computerised model of the area. The background can be flat or three dimensional. The information provided as the background can be from multiple sources and could also be layered. For example a background might include a surface map but also a map of any underground transportation system and a map of air traffic routes above ground.

The degree of detail shown on the background may be controlled dependant on the viewing scale. The visualisation environment may represent a large real space, and the background needs to cover all of this. However the part of such a large background which is displayed will depend on the viewer's viewpoint. Preferably the visualisation environment provided to a viewer is at least partially three dimensional in appearance, although that need not mean the background also has to be three dimensional.

The video feeds may be displayed within the visualisation environment as projections on virtual screens, which can either be fixed or can rotate relative to the viewer's position such that their content can always be viewed within the visualisation environment. Associated with these screens there may be graphic representations of the source's field of view. This would allow a clear understanding of true camera orientation/position even if the screen were rotated to allow easier viewing.

According to a second aspect of the present invention there is also provided a video signal integration and display system comprising: a processor adapted to receive and integrate a plurality of video sources into a visualisation environment, the video sources comprising a first source supplying a video signal representative of a background and a plurality of second sources each of which provides a video feed representative of a field of view from a viewpoint disposed within the background and including spatial data for the field of view; and a video display device for displaying an integrated representation of the video feeds from the second sources and the first source within a visualisation environment so that each of the fields of view is displayed at an appropriate position and direction on the concurrently displayed background and wherein a viewer's notional reference point, which is the viewpoint within the visualisation environment, can be altered relative to the background thus altering the view as shown on the display device and the display of the video feeds within that background.

In such a system the spatial data for the second sources that is used to integrate the associated video feeds within the visualisation environment, may include for each source one or more of its: latitude and longitude, zenith, azimuth, focal length, target width, target height, pitch, roll and yaw.

Also other aspects of the present invention as described above with respect to the method may also be applicable to the system comprising the second aspect of the present invention.

Preferably the system includes a data storage facility to allow non-contemporaneous viewing of the video feeds. This could also assist in the individual control of each video stream. The time frame of a video stream shown on a virtual screen need not be the same for each other stream displayed. This can aid the tracking of a subject through the visualisation environment. For example once a subject, whose movements over a time period are to be ascertained, is found in one view, the stream for that camera may be paused at that point (time x) where the subject is shown. As a result of the simplified spatial juxtapositioning of the views, the subject may be easily found in the field of view of another source at time (at time *x*+1). This source may be paused and the next appearance of the subject in a field of view found and logged. In this way a time and position referenced track of a subject's movements can be created across multiple sources.

It may also be possible for a change in position of the viewer's notional viewpoint within the visualisation environment to be used to control the movement of cameras that can be moved. For example if the camera's location can move, the moment of the viewpoint within the visualisation environment in direction *y* could trigger a similar movement of the camera. Also if the cameras position cannot change but its direction could alter, the movement of a viewer's viewpoint to the left might cause the camera to pan right.

The manipulation and display of the data from the various sources is advantageously achieved by a processor such as a computer. The processor may comprise one or more of the following sub-systems:
- A video annotation system that associates incoming video feeds with appropriate spatial and temporal data if such data not already associated therewith. Elements of that spatial and temporal data may be displayed on the feed within the background.
- A video revolver system which manipulates for each second source the position of a virtual screen displaying the video feed within the visualisation environment dependent on the spatial data associated with that feed and dependent on the viewers virtual viewpoint within the visualisation environment. This system may also control the display of any representation of the camera field of view which is associated with its associated virtual screen.
- A stream time controller which controls the individual time position of each video feed and the speed at which that feed is displayed. This may take the outwards form of video replay control functions such as are normally used in playback of video signals.
- A system time controller which controls the overall time frame of all sources within the system.
- An availability log which provides details of all available sources the extent of any data stored for each available source. This could allow a system according to the present invention to be kept informed of what data sources there are within the system, but also to know what adjacent systems might be integrated to widen the scope of the surveillance if desired.

Preferably the processor system comprises all the listed sub-systems.

Preferably, for video sources whose field of view is not fixed, a control interface may be provided to move the camera and alter that field of view. This alteration may be depicted within the visualisation environment as it occurs. The control interface may be provided within the visualisation environment.

As discussed above the visualisation environment may be three dimensional. If it is, a user may define a virtual three dimensional path of interest through that environment, such that all second sources along the virtual path of interest may be controlled and subsequently have their data integrated and analysed by the user.

The display system may further include a mathematical module, which may be integrated in or separate from the processor, which module uses algorithms to process and analyse data and target entities appearing within the field of view of second video sources to correlate what is occurring in one video source with what has happened, is happening, or should happen, in a different second source or location. This can be used to analyse the efficacy of systems or entities within the video world, such that the effects of one system or entity upon another may be deduced from algorithms that look at the loading of leaves and nodes for specific systems or entities within the three dimensional environment. A visual logical language may also be constructed based upon the outcomes of algorithms analysing media from specific second sources, such that the input or display of other video sources can be automatically controlled dependent on what that analysis determines.

Means may be provided to allow a user to link two sources, or entities displayed therein, and attach mathematical operators to that link such that when one or more certain condition is fulfilled at one end of the link, another condition may be analysed, or an effected caused, at the other end of the link.

According to a third aspect of the present invention there is further provided a video surveillance system comprising: a plurality of video cameras linked to a video signal integration and display system of the second aspect as described above.

The method and system of the present invention lend themselves to implementation using a computer, which could provide the data processing and visual manipulation required, as well as displaying the visualisation environment on a suitable display device. Such display devices may comprise any display device capable of displaying video images, either in flat form such as a monitor, or in more involved devices such as 3D projectors, virtual reality head sets or surface computing interface to realise and render the information graphically.

The present invention may provide a visualisation environment appearing like a computer game, wherein the user can manoeuvre around in a three dimensional world, the system allowing real world video imagery to be rendered within the three dimensional world in a spatially accurate manner with respect to where the video was captured. In such a manner instead of looking at a bank of multiple CCTV monitors, a person reviewing CCTV may navigate around in a three dimensional world to position themselves such that they may review the scene as if they are actually within the world itself.

The present invention can allow a user of the system to review all of the video sources simultaneously or individually with respect to a defined spatial reference in terms of both the users viewing position and their desired viewpoint. It also can provide the ability to cluster video sources from multiple disparate systems, through the identification and selection of the video sources and the mining of spatial and temporal metadata therefrom to provide source existence evidence. The present invention can allow a user the ability to annotate specific groups and clusters of information generating media sources together to form entities of interest. An example could be the user clustering all video streams relating to traffic flow for a specific road. An algorithm may then be employed to count the number of vehicles passing down one stretch of road by either tracking the individual vehicles from each video source such, that weight of traffic for each section of road may be computed, or by simply counting individual vehicles entering and leaving frame of a specific camera. In such a manner the user may designate a non correlated or non standard grouped set of cameras to determine, through the employment of appropriate video analysis algorithms, the weight loading of say vehicular traffic for a routing. This may potentially only be facilitated through the use of multiple separately owned and operated video systems. Through using multiple extended video systems as a single entity it is possible, not only to track entities of interest, but to data mine information regarding inputs and outputs of specific paths of interest as designated by the user. By using the video sources as nodes of interest, the operator may determine specific weighting of leaves of data, thus it is possible to develop models of interaction based upon nodes and leaf constructs, thus providing answers to explicit mathematical constructs, perhaps through Boolean logic, predicate calculus, etc. which can be determined by asking each video source specific questions based upon the results of analysing each video source for specific data, determined by a third party algorithm.

There is further potential to export a three dimensional integrated video world to new forms of interaction. Multi-touch surface computing (See US Patent 20060284874) provides the user of such a system, the ability to manipulate their field of view in 3 dimensions. Instead of the simple two dimensional VDU style interface. In such a manner the user may be able to interact with the system in three dimensions, not only giving them the ability to zoom into an area of interest but also to designate in three dimensions a virtual path of interest with a varying X,Y, or Z factor. In such a manner it is possible for the user to define a three dimensional boundary of interest, such that all of the video and other cartographic media streams within that boundary of interest may be contemporaneously analysed to provide the operator with the ability to cross reference and analyse multi-planar information sets for the leaf and node mathematical operators to be applied thereto.

If the video display device uses a surface computing interface to realise and render the information graphically, the user may better interact within the three dimensional video world using surface computing controls. This also provides the ability as discussed above for the user to annotate a virtual path of interest not only with respect to two dimensional cartographic space but also three dimensional cartographic space, thus allowing for a function of time to be run over a three dimensional virtual path of interest.

Multi surface computing also affords the user the ability to control the stream time and system time temporal control interfaces through the usage of multi touch inputs, as well as being able to control their field of view with ease. Surface computing facilitates the ability for the user to link, through hand gestures, two discrete objects or entities of interest. In such a manner the user may draw virtual string between two visual entities of interest, such that as entity "A" fulfils a certain criteria then entity "B" is analysed for a specific constraint. In such a manner the concept of virtual string may be drawn in the virtual world between two entities of interest. It is presumed that this virtual string will not be restrained to the 3D surface interface, however when rendering the video "world" in 2 dimensions, the ability for the user to link the two entities may be limited.

As multi touch surface computing is not a touch screen technology, it allows for the Z factor, i.e. the height of the users hands above the surface to be computed, in such a manner and with holographic projection, it is envisaged that the video world controller will move into true 3D manipulation and control of the system.

In order that it may be better understood, but by way of example only, the present invention will now be described in more details with reference to the accompanying drawings in which:

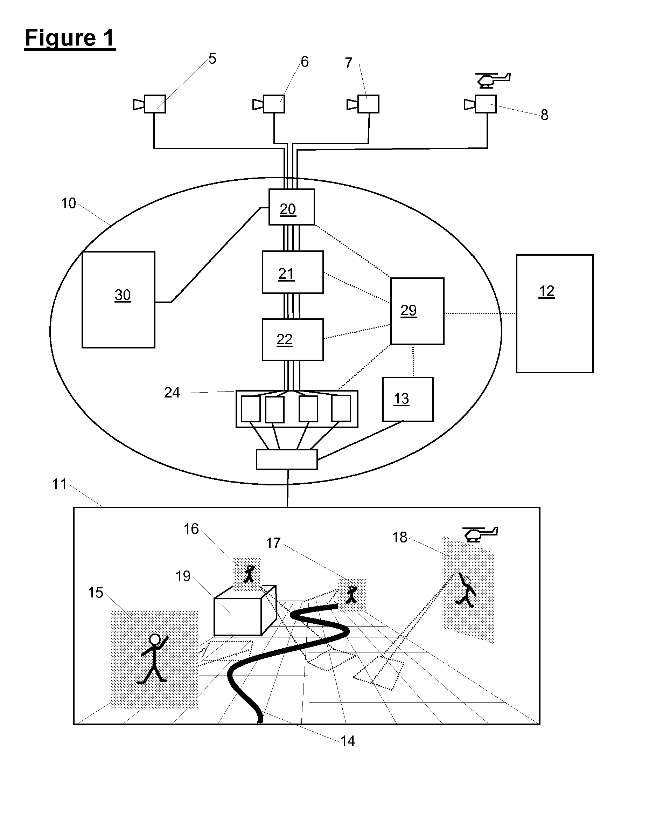

**Figure 1** is a stylised representation of a system according to the present invention operating a method according to the present invention.

In the schematic and stylised representation of a system that is operating the present invention shown in Figure 1, four cameras 5, 6, 7, 8 feed video stream into a processor 10 which renders and controls what is displayed on the video screen 11. A viewer controls the system through an interface 12 that may include any suitable means such as keyboard mouse or joystick.

The system described consists of a several components first of which is the visualisation environment shown on the video screen 11. The visualisation environment works by forming a geographically accurate environment within which video sources may be replayed with a level of accuracy representative of the geographical location where the video sources were acquired.

The visualisation environment has a background supplied by a first video source 13 which acts as a geographic and mapping datum unifier, thus allowing for multiple camera sources to be incorporated seamlessly within the digital environment. Any background can be displayed behind the video streams as along as it can be geographically referenced to the video streams.

In Figure 1 the visualisation environment shows a background in the form of a 3D map, with a river 14 and a block 19 upstanding from the surface to represent a building. On this map are displayed four virtual screens 15, 16, 17, and 18, each of which shows a video feed from one of the cameras 5, 6, 7 and 8. The feed may be moving or still. The field of view of camera 5 is shown on screen 15, the field of view of camera 6 is shown on screen 16, the field of view of camera 7 is shown on screen 17 and the field of view of camera 8 is shown on screen 18. The cameras may be fixed or mobile and in this example camera 8 is located on a helicopter, but cameras 5 to 7 are fixed. As the helicopter that camera 8 is mounted on moves, the position of the virtual screen 18 will also move with respect to the background.

A viewer of the visualisation environment has a notional viewpoint and direction of view within the environment. The picture shown on the display device 11 is set with respect to that point and moves if the notional viewpoint is moved. In this example the virtual screens 15-18 are rotated to ensure that they always face toward the viewer's viewpoint to unsure that they are visible.

The processor 10 comprises various components. These include the availability log 20. This keeps an up to date record of video media received by the system. This video data is stored in the storage 30, so that it is available at a latter stage within the video-world. In such a manner the system always knows what sources are available, and for each of those what video information is available for display within the system.

The availability log 20 works by storing a database of geographic locations of the cameras providing the video imagery, coupled with the times that video data is available for, and the spatial data therefor such as (for a fixed camera) the pan, tilt and zoom orientations of the camera - which provides the camera's field of view. This database allows the system to provide the user with an accurate picture of which cameras are available for a specific geographic location shown in the visualisation environment, and where each camera was looking at a specific time. It will also record what kind of video, i.e. monochrome, colour, infrared etc the source provides. The availability log also keeps a track of what third party processing system are available to the specific cameras. For example if an automatic number plate recognition system is working with certain cameras, this information is recoded and is presented to the user by the availability log.

The system also comprises a system time controller 21. This allows the user to set the global time within the visualisation environment. In this manner the user can review all the video sources from within the visualisation environment at any date in time for which there is video source data available.

The system time controller 21 facilitates the overall temporal control of the visualisation environment. It works as its name suggests by globally controlling the time of the entire visualisation environment such that if the user wishes they may review all video within the visualisation environment in faster than real time. Utilising standard "trick" controls the user may fast forward or rewind through the available media until they find the time of interest. In such a manner the user may answer specific queries regarding the time at which an object of interest was active within the visualisation environment. The user may also choose to review the video in faster than real time, to allow the user the ability to establish very quickly at what stage an object of interest moved from one point to another, or maybe even exited the specific visualisation environment location.

A stream time controller 22 allows control of each individual video stream going into the visualisation environment. Each stream can be controlled such that the live video information can be viewed by the user, or the user can rewind and review each video source as they desire.

The stream time controller works by presenting standard video "trick" controls to the user for each individual virtual screen 15 - 18. In this manner it is possible for the viewer to review an individual video source within the context of the visualisation environment where the user is currently positioned without altering the others. By being able to control the individual video streams it is possible for the user to construct a "path" that an object of interest may have taken through the multiple video streams that are contained in the visualisation environment. If each video stream is paused at a point where the object of interest is in view, then it is possible for the user to construct an accurate time path for the movement of the object of interest through the visualisation environment. Once this time path is established from one or more cameras it is then possible to utilise predictive algorithms to allow an extrapolation to be established as to where the object of interest might now move to within the real word represented by the visualisation environment.

The orientation of a virtual screen displaying each video stream within the visualisation environment is controlled by a video revolver 24. This rotates each screen about appropriate axes; such that the screen can always be viewed from whatever viewpoint the viewer has navigated themselves to within the visualisation environment. The virtual screens could be fixed such that a viewer would need to move to an appropriate place within the visualisation environment to see them. However it is preferred that they are made to revolve such that the user can always see the video information. If the virtual screens did not revolve it is possible that the user would not be able to see the available video source as they may be looking side on to the source.

All the video streams and the background from the first video source 13 are compiled and packaged for transmission to the video display device by the video output controller 28.

The viewer controls the system using the input controls 12, which are connected to a control interface 29. This interfaces with the availability log, the system time controller 21, the stream time controller 22, the video revolver 24 and the first video source 13.

The visualisation environment is a scalable and indexable three dimensional world. The visualisation environment is constructed from a three dimensional graphical interface, an example of this would currently be an OpenGL or DirectX environment, but the environment could be constructed using any such language or third party API. The visualisation environment may be scaled up or down, in real time to allow the user the ability to manoeuvre around the environment to review the imagery which they desire. The ability to allow the continued expansion of geographic space by the user as they manoeuvre their way around the environment allows for a user to follow a target subject across multiple video monitoring networks. If one network of cameras exists to cover a metropolitan area, whilst another exists to cover an adjacent motorway network, then it is possible to integrate the data from these and to track and trace individuals from one video-world to another. In such a manner it is possible for movement prediction algorithms to work outside a subject's immediate area, and thus calculate information regarding the wider potential route of an object of interest.

The data arrives from each camera 5-8 and is then controlled through a number of stages. These are defined below:
- Data from each video source arrives as a video stream. If the geographical and spatial characteristics of the video source are known to the system (and are not already embedded in the stream) this data is associated with the streamed data. From certain cameras (especially mobile ones), the incoming data stream already contains the geographical and spatial characteristics of the field of view because this is provided by the camera.
- A record is kept in the availability log 20 of which cameras are available at which locations, and for what time periods the video data is available. The data is stored in a data store 25.
- The visualisation environment time is controlled by the system time controller 21 which allows the user to set the current datum time for whole system, such that all the video feeds may be accessed if the availability log indicates that they have video footage available from for the time specified.
- The individual video streams are controlled by the stream time controller, which allows the user to individually index and control replay of each video source.

By using the present invention it is possible for a viewer to review, and interact with multiple video sources within a geographically accurate environment. Using such a system makes it is possible to provide a single unique interface that can be utilised to aid in the simplification and process enhancement for tracking objects across multiple video sources. Such a system also provides useful facilities for predictive algorithms to be employed using multiple video sources as the initial dataset from which the algorithm computes the prediction.

The present invention provides a number of benefits, such as but not limited to:
- allowing the user to monitor multiple cameras within a specific geographic location through a single graphical environment;
- allowing for the creation of a system that can take in multiple video sources of any format and replay them within a geographically accurate environment;
- allowing the user of the system to review all of the video sources simultaneously or individually with respect to time;
- allowing the user of the system to review all of the video sources simultaneously or individually with respect to space;
- allowing the user to track objects of interest through the visualisation environment as a result of the realistic geographical representation of the physical location of the cameras;
- allowing for predictive algorithms to work to track objects throughout these multiple video sources, such that their past or future routes may be predicted;
- allowing predictive algorithms to work to equate the efficacy of entities, such that the effects of one entity upon another may be derived from algorithms that look at the loading of leaves and nodes for specific entities within the three dimensional world environment;
- allowing for the co-operative sharing of video information between different video system operators, such that one video network can expand its geographic realisation into the next geographic area, simply by being supplied from another video-world user;
- allowing for each individual media stream to be reviewed as a subset of a global time quantifier;
- allowing for a logical language to be constructed from the outcomes of running third party algorithms upon specific media sources located within the three dimensional world;
- allowing the operator of the system to utilise such technologies as surface computing to realise and render the information graphically, such that the user may interact within the three dimensional video world using surface computing controls, thus providing the ability for the user to annotate a virtual path of interest not only with respect to two dimensional cartographic space but also three dimensional cartographic space, thus allowing for a function of time to be run over a three dimensional virtual path of interest;
- allowing the operator of the system the ability to use "virtual string" to link two entities of interest, and attaching mathematical operators to the string that when such a condition is fulfilled at one end of the string, another condition maybe analysed or effected at the other end of the string.

## Claims

1. A method of integrating video information derived from a plurality of video sources into a visualisation environment for display on a video device, the video sources comprising a first source supplying a video signal representative of a background for the visualisation environment and a plurality of second sources each of which provides a video feed representative of a field of view from a viewpoint within the background and including spatial data for the field of view; in which method the plurality of video feeds from the second sources is integrated with the video signal from the first source so that the visualisation environment comprises each of the fields of view displayed on the display device at an appropriate position and direction in relation to the concurrently displayed background and wherein a viewer's notional reference point, which is the viewer's viewpoint within the visualisation environment, can be altered relative to the background thus altering the view as shown on the display device and the display of the video feeds within that background.

2. A method of integrating video information as claimed in claim 1, wherein temporal data is associated with the video feeds and is used to integrate video information for non-contemporaneous display.

3. A method of integrating video information as claimed in claim 1 or claim 2, wherein the data from the video sources as well as integrated or associated spatial and temporal data is stored for later retrieval or replay.

4. A method of integrating video information as claimed in any of the preceding claims, wherein the spatial data for the second sources that is used to integrate the associated video feeds within the visualisation environment, includes for each source one or more of its: latitude and longitude, zenith, azimuth, focal length, target width, target height, pitch, roll and yaw.

5. A method of integrating video information as claimed in any of the preceding claims, wherein the first source integrated provides a background that is cartographic in nature.

6. A method of integrating video information as claimed in any of the preceding claims, wherein the visualisation environment provided to a viewer is three dimensional in appearance.

7. A method of integrating video information as claimed in any of the preceding claims wherein the video feed are displayed within the visualisation environment on virtual screens, and associated with these are graphic representations of the source's field of view, its location, and its frustum.

8. A video signal integration and display system comprising: a processor adapted to receive and integrate a plurality of video sources into a visualisation environment, the video sources comprising a first source supplying a video signal representative of a background and a plurality of second sources each of which provides a video feed representative of a field of view from a viewpoint disposed within the background and including spatial data for the field of view; and a video display device for displaying an integrated representation of the video feeds from the second sources and the first source within a visualisation environment so that each of the fields of view is displayed in an appropriate position and direction on the concurrently displayed background and wherein a viewer's notional reference point, which is the viewpoint within the visualisation environment, can be altered relative to the background thus altering the view as shown on the display device and the display of the video feeds within that background.

9. A video signal integration and display system as claimed in claim 8, in which the spatial data for the second sources that is used to integrate the associated video feeds within the visualisation environment, includes for each source one or more of its: latitude and longitude, zenith, azimuth, focal length, target width, target height, pitch, roll and yaw.

10. A video signal integration and display system as claimed in claim 8 or 9, in which the processor comprises one or more or preferably all of the following sub-systems:
- a video annotation system that associates incoming video feeds with appropriate spatial and temporal data if not already associated therewith, and/or displays this associated with the feed within the background;
- a video revolver system which manipulates for each second source the position of a virtual screen displaying the video feed with the visualisation environment dependent on the spatial data associated with that feed and dependent on the viewers virtual viewpoint within the visualisation environment, such that the viewer may always be able to see the video source imagery;
- a control interface to alter the field of view for video sources whose field of view is not fixed, which alteration is depicted within the visualisation environment as it occurs;
- a stream time controller which individually controls the time position of each video feed and the speed at which that feed is displayed;
- a system time controller which controls the overall time frame of all sources within the system; and
- an availability log which provides details of all available sources and any data stored for each available source.

11. A video integration and display system as claimed in any of claims 8 to 10 wherein the visualisation environment is three dimensional and a user may define a virtual three dimensional path of interest, such that all second sources along the virtual path of interest may be controlled and subsequently have their data integrated and analysed by the user.

12. A video integration and display system as claimed in any of claims 8 to 11 that further includes a mathematical module, which may be integrated in the processor, and which uses algorithms to analyse target entities appearing within the field of view of second video sources to correlate what is occurring in one video source with what has happened, is happening, or should happen in a different video source to analyse the efficacy of systems or entities within the video world, such that the effects of one system or entity upon another may be deduced from algorithms that look at the loading of leaves and nodes for specific systems or entities within the three dimensional world environment.

13. A video integration and display system as claimed in any of claims 8 to 12, wherein the video display device uses a surface computing interface to realise and render the information graphically.

14. A video surveillance system comprising: a plurality of video cameras linked to a video signal integration and display system as claimed in any of claims 8 to 13.

15. Software loaded on a computer or stored on a data carrier adapted to perform the following method steps: receiving video information from a plurality of video sources for integration into a visualisation environment for display on a video device, the video sources comprising a first source supplying a video signal representative of a background for the visualisation environment and a plurality of second sources each of which provides a video feed representative of a field of view from a viewpoint within the background and including spatial data for the field of view; integrating the plurality of video feeds from the second sources with the video signal from the first source so that the visualisation environment comprises each of the fields of view displayed on the display device in an appropriate position and direction in relation to the concurrently displayed background; and displaying the visualisation environment to a user who may control the viewpoint there within.
